(19) Europäisches Patentamt / European Patent Office / Office européen des brevets

(11) **EP 2 416 054 A2**

(12) **EUROPEAN PATENT APPLICATION**
published in accordance with Art. 153(4) EPC

(43) Date of publication:
**08.02.2012 Bulletin 2012/06**

(21) Application number: **10758983.0**

(22) Date of filing: **29.03.2010**

(51) Int Cl.:
**F16S 1/00** $^{(2006.01)}$     **F16B 5/02** $^{(2006.01)}$

(86) International application number:
**PCT/KR2010/001891**

(87) International publication number:
**WO 2010/114258 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 KR 20090027524**

(71) Applicant: **Yun, Isik**
**Onggi-do 412-722 (KR)**

(72) Inventor: **Yun, Isik**
**Onggi-do 412-722 (KR)**

(74) Representative: **Maillet, Alain**
**Cabinet Le Guen Maillet**
**5, place Newquay**
**B.P. 70250**
**35802 Dinard Cedex (FR)**

(54) **COMPONENTS FOR AN ASSEMBLY-TYPE FRAME**

(57)     Components for an assembly-type frame according to the present invention comprise a bolt and a strip. The bolt has a locking pillar portion which is interposed between a head portion and a cylindrical body of the bolt, and the shortest diameter of which is larger than the diameter of the cylindrical body. The locking pillar portion has a non-circular shape, but not a cylindrical shape. The strip is formed into a panel shape, and has a joint hole penetrating through the surface of the strip. The joint hole has a shape for engaging with the locking pillar portion of the bolt. The components of the assembly-type frame of the present invention are configured to satisfy the formula $(n-1) \times b < a \leq n \times b$
wherein n represents the number of the strips, b represents the thickness of each strip, and a represents the height of the locking pillar portion, to thereby set the angle between the strips to a specific angle, and to enable said strips for forming the frame of a structure to be easily assembled without any additional work such as measuring an angle.

[Fig. 1]

EP 2 416 054 A2

**Description**

**Technical Field**

The present invention disclosure relates to components for an assembly-type frame, and more particularly, to components for an assembly-type frame in which by providing a bolt, a nut and strips through which a plurality of joint holes are formed and which are fastened together by the bolt and nut, a desired frame structure can be easily assembled.

**Background Art**

In general, a final product may be provided by assembling standard components having various angles and shapes, enabling application designs as various configurations depending on a maker's intention, being different from a complete final product provided as a specific shape by designing a specific product.

As a representative example of this product, a specific shape of a block toy may be provided by fitting connection parts formed on each of a plurality of components of a several standard size. Further, components of an aluminum ally bar through which a plurality of joint holes are formed and a fastening means are provided to assemble various frames for fabricating a shelf, a display stand and a low wooden bench.

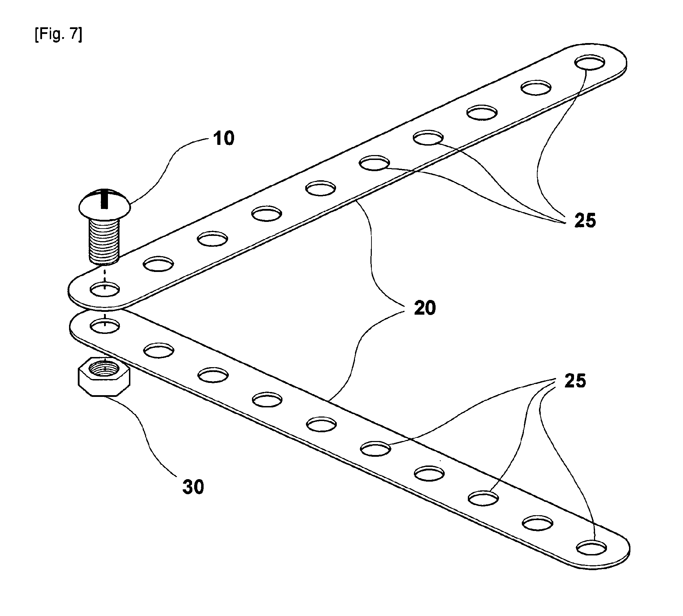

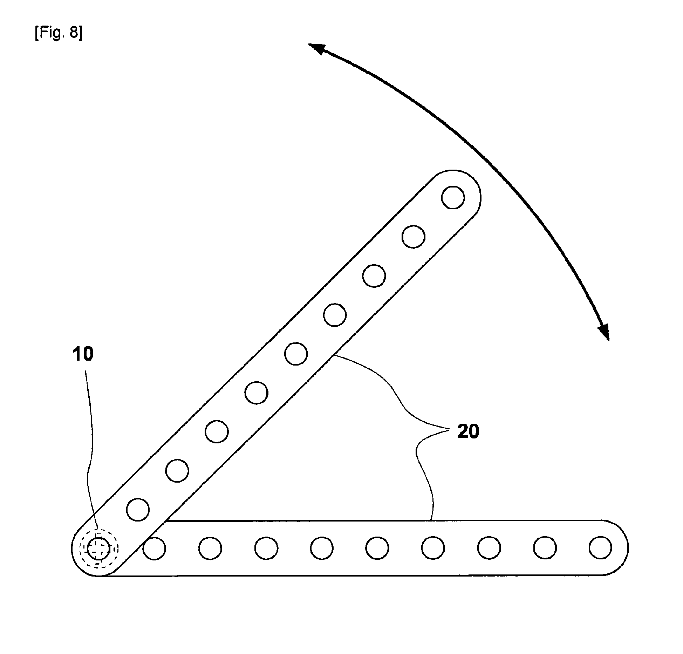

In FIGS. 7 and 8, a prior assembly-type frame configuration is shown, including a strip 20 which is made of a narrow and long plate member and through which a plurality of joint holes 25 are formed at a predetermined interval and which serves a main frame and a bolt 10 penetrating through the joint hole 25 of the strip 20 and fastened to the nut 30 for assembling at least two strips 20.

The prior components for an assembly-type frame may be provided, similar to the block toy, as an amusement tool and studying material and applied to props of daily lives wherein it may be sold in market as a independent product of one component including strips having various length and shapes, a bolt and nut for jointing the strips, and a driver as a fastening tool.

The components for an assembly-type frame may include mainly, as shown in FIGS. 7 and 8, strips 20, a bolt 10 and a nut 30 wherein the strip is a main frame of a completed structure, and the bolt 10 and the nut 30 serve to fasten the strips 20.

In general, the joint holes 25 formed through the strip 20 at a predetermined interval have circular shapes, respectively, identical to a cross section of a cylindrical body of the bolt 10 on which a plurality of screw threads are formed and further have the sizes equal to each other to secure stably the strips fastened through the bolt 10 and the nut 30.

In order to fabricate a frame of a specific configuration at least two strips may be fastened together through a bolt 10 and a nut 30, as shown in FIG. 7.

As shown in FIG. 7, in a case where two (or more) strips 20 are assembled to each other, one cylindrical body of a bolt 10 may penetrate simultaneously into the joint holes 25 disposed at a location to be fastened and then tightened through an opposite nut 30 and thereby securing firmly the strips.

A fastening state of the strips is shown in FIG. 8 wherein a head portion of a bolt 10 is indicated as dotted line.

Here, the fastened strips 20 may be connected at a predetermined angle or kept at a predetermined angle in order to fabricate a specific structure connected through the strips 20; however, in a case where the strips 20 are fastened, as shown in FIG. 8, it is not easy to set a specific angle (for example, 45°, 90°, etc.,) between the fastened strips 20 and also even when the strips 20 are fastened together at a specific angle, one strip 20 may be rotated easily around the other strip 20 as indicated by an arrow and thus a fitting state of the strips may not kept firmly.

**Disclosure**

**Technical Problem**

The present invention has been proposed to solve the above drawbacks of the prior assembly-type frame and an object of the present invention relates to provide components for an assembly-type frame through which in a case where at least two strips are assembled, a specific angle may be settable between the fastened strips and further a setting angle in a fastening state may be kept firmly.

**Technical Solution**

According to one aspect of the present invention, components for an assembly-type frame are provided, comprising a bolt provided with a head portion and a cylindrical body extending downward from the head portion and formed with a plurality screw threads therein, a nut formed with a plurality of screw threads, corresponding to the plurality of screw threads in the bolt, and at least two strips which are interposed between the head portion of the bolt and the nut and connected to each other when the bolt and the nut are fastened, and provided with a plurality of joint holes wherein the bolt is provided with a locking pillar portion which is disposed between the head portion and the cylindrical body and a shortest diameter of which is greater than a diameter of the cylindrical body and is shaped as a non-circular form but not a circular shape, and wherein the strip formed of a plate member and provided with a plurality of joint holes each of which is shape-engaged with the locking pillar portion of the bolt to restrain a strip rotation around an axis of the bolt when the locking pillar portion is inserted into the joint hole, and wherein a formula of (n-1) x b < a $\leq$ n x b is satisfied, wherein the number of the strip is n, a thickness of the strip is b, and a height of the locking pillar portion is a.

At this time, a sectional shape of the locking pillar portion vertical to axial direction of the bolt is a regular polygonal shape.

Furthermore, a sectional shape of the locking pillar portion vertical to an axial direction of the bolt is a square form and at least one of the joint holes corresponding to the locking pillar portion is a star shape formed in overlapping manner with outer lines made by rotating two square forms at 45°.

A sectional shape of the locking pillar portion vertical to an axial direction of the bolt is a regular triangle and at least one of the joint holes corresponding to the locking pillar portion is a star shape formed in overlapping manner with outer lines made by rotating two regular triangles at 60°.

## Advantageous Effects

According to the present invention, firstly, when the strips are jointed as main frames, a specific angle between the fastened strips may be set easily and precisely without measuring separately the angle.

Secondly, an initial setting angle between at least two strips fastened once through a bolt and a nut may be kept firmly and thereby improving a rigidity of a complete final product.

## Description of Drawings

FIG. 1 is a perspective view illustrating a bolt and nut of the components for an assembly-type frame according to a preferred embodiment of the present invention;

FIG. 2 is a perspective view illustrating strips of the components for an assembly-type frame according to a preferred embodiment of the present invention;

FIG. 3 is a perspective view illustrating a fastening state of the bolt, nut and strip as shown in FIGS. 1 and 2;

FIGS. 4 and 5 are views illustrating fastening states of the strips as shown in FIGS. 1 and 2, respectively;

FIG. 6 is a side-sectional view illustrating a fastening state of a bolt and strips as shown in FIGS. 1 and 2; and

FIGS. 7 and 8 are views illustrating prior components for an assembly-type frame, respectively.

## Best Mode

The components for an assembly-type frame according to the present invention may include a bolt provided with a head portion and a cylindrical body extending downward from the head portion and formed with a plurality screw threads therein, a nut formed with a plurality of screw threads, corresponding to the plurality of screw threads in the bolt, and at least two strips which are interposed between the head portion of the bolt and the nut and connected to each other when the bolt and the nut are fastened, and provided with a plurality of joint holes wherein the bolt is provided with a locking pillar portion which is disposed between the head portion and the cylindrical body and a shortest diameter of which is greater than a diameter of the cylindrical body and is shaped as a non-circular form in addition to a circular shape, and wherein the strip formed of a plate member and provided with a plurality of joint holes each of which is shape-engaged with the locking pillar portion of the bolt to restrain a strip rotation around an axis of the bolt when the locking pillar portion is inserted into the joint hole, and wherein a formula of (n-1) x b < a $\leq$ n x b is satisfied, wherein the number of the strip is n, a thickness of the strip is b, and a height of the locking pillar portion is a.

## Mode for Invention

Exemplary embodiments of the present invention will be described below in detail with reference to the accompanying drawings. Wherever possible, the same reference numerals will be used to refer to the same elements throughout the specification, and a duplicated description thereof will be omitted. Meanwhile, the components having similar functions to the prior art will be given to same reference numerals.

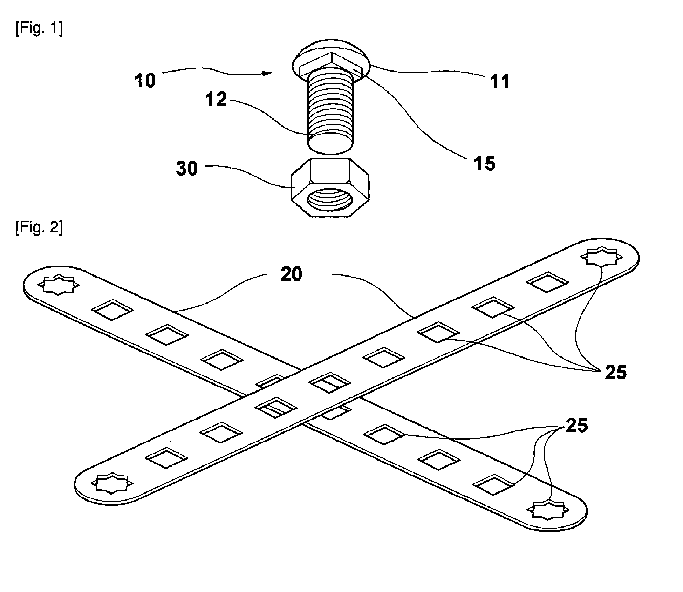

FIG. 1 is a perspective view illustrating a bolt 10 and nut 30 of the components for an assembly-type frame according to a preferred embodiment of the present invention.

The components for an assembly-type frame according to the present invention may includes mainly three parts of a bolt 10, a nut 30 and a strip 20 wherein FIG. 1 shows the bolt 10 and the nut 30.

As shown in drawings, the nut 30 may be provided with a joint hole having screw threads therein, not being different from a typical bolt 30 as shown in FIGS. 7 and 8, and further the bolt 10 may be provided with, being different from a prior bolt, a locking pillar portion 15 of a non-circular shape disposed between a head portion 11 and a cylindrical body 12 on outer peripheral surface screw threads are formed.

Here, the locking pillar portion 15 may be shaped as a non-circular form having a shortest diameter greater than a diameter of the cylindrical body 12 wherein all kinds of non-circular forms may be adopted for the locking pillar portion within a scope of the present invention, excluding a circular pillar form of the circular body 12 and further in the present embodiment a square pillar form having a square bottom area is adopted for the locking pillar portion.

That is, the bolt 10 according the present invention, being different from a general bolt, a locking pillar portion 15 of a non-circular shape may be provided between the head portion 11 and the cylindrical body 12 and further detailed description thereof will be given below.

FIG. 2 is a perspective view illustrating strips 20 of the components for an assembly-type frame according to a preferred embodiment of the present invention wherein two strips 20 are configured as being overlapped.

The strip 20 may be a main frame of the components for an assembly-type frame wherein it may be formed of a plate member and further its length, width and outer circumference may be varied, if necessary.

Here, the shown strip 20 may be formed of a narrow and long plate member and may serve a bar when it is assembled.

Furthermore, the whole shape of the strip 20 as shown in FIG. 2 may not be different greatly from the prior strip as shown in FIGS. 7 and 8 wherein a plurality of joint holes 25 are formed at a predetermined interval, being similar to the prior art, but it is **characterized in that** a shape of the joint hole 25 is a non-circular form.

In the present embodiment, the joint hole 25 may be shape-engaged with the locking pillar portion 15 of a square pillar form having a square sectional area and it is confirmed through FIG. 2 that the joint hole may be formed as same sectional area of a square form as that of the locking pillar portion 15 or as a star form of outer lines made by rotating two square forms at 45 °.

That is, in a case where the bolt 10 as shown in FIG. 1 is inserted into the joint hole 25 of a square form (or shape-engaged form with a square form), the locking pillar portion 15 of the bolt 10 is shape-engaged with the joint hole 25 and further a rotation of the strip 20 around an axis of the bolt 10 is entirely restrained, being different from the prior art as shown in FIGS. 7 and 8.

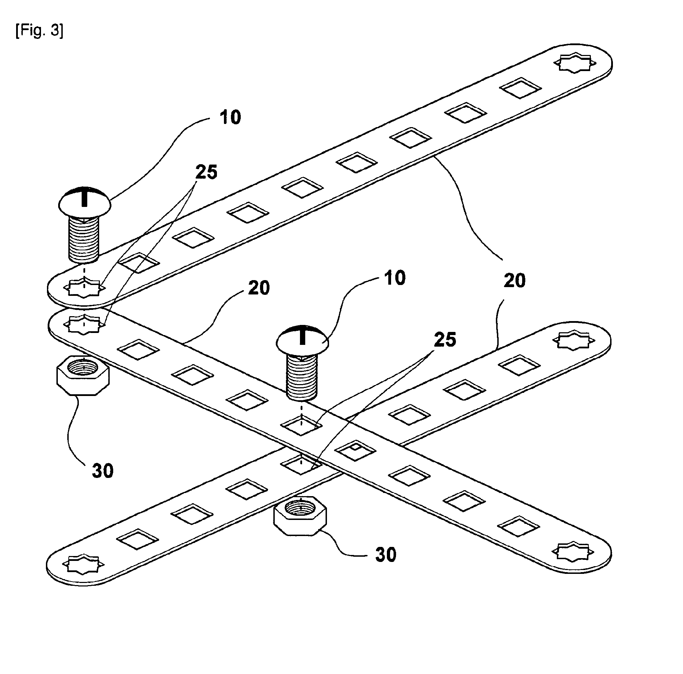

Accordingly, in a case wherein three strips 20 and two bolts 10 and nuts 30 are assembled as shown in FIG. 3, a set of bolt 10 and nut 30 may be fastened simultaneously with respect to two strips 20 and two strips 20 fastened to one locking pillar portion 15 may be set and remain at a predetermined angle from each other.

Meanwhile, as described in the foregoing, in order to restrain the rotation of the strip around the bolt 10, a sectional shape of the locking pillar portion 15 may be the same as the corresponding joint hole, excluding a circular shape.

However, it has to be understood that angle settings of each strips 15 fastened together may be varied, depending on sectional shapes of the locking pillar portion of a non-circular pillar form.

That is, settable angle cases of the strips correspond to the numbers of rotation symmetry of a sectional form, and as an example, in a case where a sectional shape of a locking pillar portion 15 is an elliptical pillar form and a joint hole is a same shape, a rotation symmetry angle of an ellipse 180°and 360°(or 0°) and thus the settable angle of the strip 20 fastened simultaneously together to one bolt 10 may be limited to two cases.

Furthermore, in a case where a sectional shape of the locking pillar portion 15 is a regular polygonal form as described in the shown embodiment, the settable angle may increase as the rotation symmetry further increases.

For example, in a case where a sectional shape of a locking pillar portion 15 is a regular triangle and also a shape of a joint hole 25 is a regular triangle, a rotation symmetry angle of a regular triangle is 120°, 240° and 360°(or 0°), and thus the settable angle of two strips fastened simultaneously to one bolt 10 may be three cases. Further, in a case where a sectional shape of a locking pillar portion 15 is a square pillar form and a joint hole 25 is a square form of the same as the locking pillar portion, as shown in the embodiment, the rotation symmetry angle of a square form is 90°, 180°, 270°and 360° (or 0°), and thus the settable angle of two strips 20 may be four cases.

This technical theory may apply equally to a regular pentagon and a regular hexagon wherein the settable angle cases of two strips may increase depending on an increasing numbers of the rotation symmetry angles.

Accordingly, in a case where more than two strips 20 are fastened, they may be arranged at various setting angles wherein a sectional shape of a locking pillar portion 15 may be shaped preferably as a regular polygonal form and further the sectional shape of the locking pillar portion 15 may be a regular triangle or a square form in consideration of a manufacturing facility and a manufacturing preciseness.

Meanwhile, as shown in FIGS. 2 and 3, in a case where the joint holes 25 are shape-engaged with the sectional forms of the locking pillar portion 15, the joint holes may be square-formed as the same as the sectional forms of the locking pillar portion 15 and further the joint holes 24 disposed on both ends of the strip 20 may be formed as having star forms.

The joint holes 25 of a star form may be configured through outer lines made by rotating two square forms at 45° and overlapped them. Here, in a case where the locking pillar portion 15 is a square pillar form and the joint hole 25 is shaped as a square pillar form as same as the locking pillar portion, the settable angles of the strips are four cases, whereas the joint hole 25 is shaped as a star form, as shown in drawings, and a rotation symmetry angle is 45°obtained by dividing 90°of a rotation symmetry angle of a square form into two, and thus the case of the settable angles increases to 8 cases two times a normal case while the locking pillar portion 15 remains a square form.

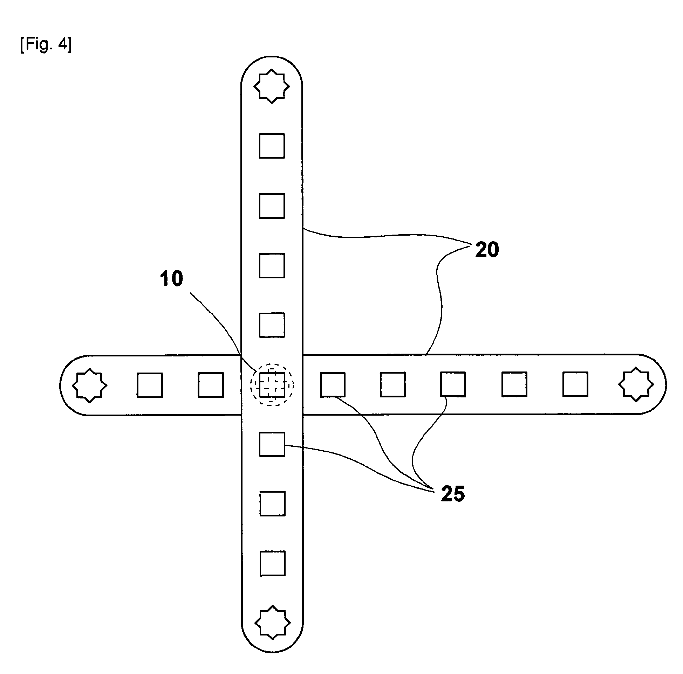

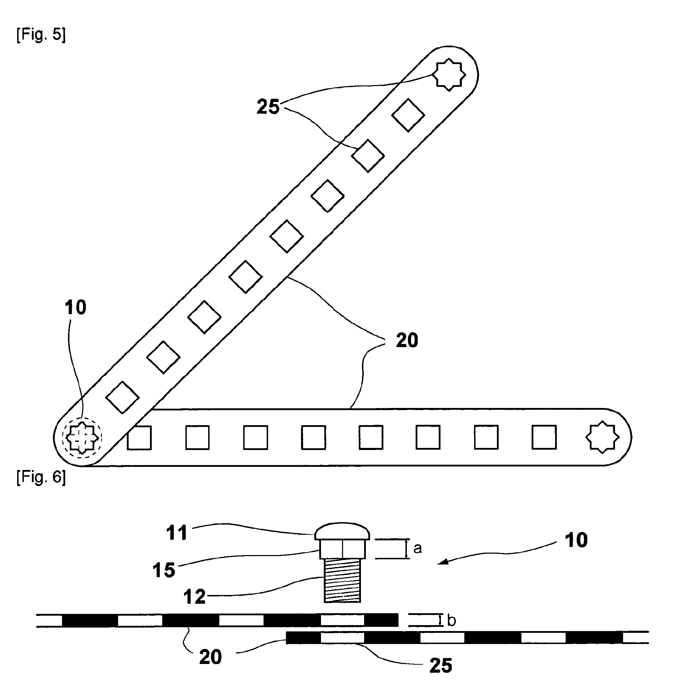

That is, in a case of FIG. 4 where two strips are fastened together, a bolt 20 is fastened through the joint hole 25 of a square form and the settable angles of two strips are 90°and 0°, and further in case of FIG. 5 where two strips are fastened together, a bolt 20 is fastened through the joint hole 25 of a star form, the settable angles are multiple 45°.

This varied configuration of the joint hole 25 may be applied to the locking pillar portion of a regular polygonal shape in a same manner.

Hereinafter, referring to FIG. 6, a height condition of a locking pillar portion 15 of a bolt 10 depending on number of a strip 20 and a thickness thereof will be described.

FIG. 6 is a side-sectional view illustrating two strips 20 fastened together and a bolt 10 for fastening them wherein in the drawing a white part of the strip 20 indicates a joint hole 25 and the nut 30 is not shown.

Here, the number of the strip 20 to be fastened simultaneously to one bolt 10 may be two or more. In this case, the locking pillar portion 15 of the bolt 10 has to be inserted into all joint holes 25 in order to maintain a predetermined angle of each strips 20 fastened together.

For this purpose, the locking pillar portion 15 has to have a predetermined height and the height is associated with a thickness and the number of the associated strip 20.

For example, in a case where a thickness of each strip 20 is 1mm, the number of the strips to be fastened together is two, the height of the locking pillar portion 15 may exceed to at least 1mm for the locking pillar portion to be inserted into all joint holes 25 and further may be less than 2mm of summation of two strip thicknesses for locking the strip when a nut is assembled.

That is, as shown in drawings, when a height of a locking pillar portion 15 is a, a thickness of a strip is b, and the number of the associated strip is n, the formula indicating the forgoing description will be given below.

$$(n-1) \times b < a \leq n \times b$$

**Industrial Applicability**

In a case where a specific frame configuration using the components for an assembly-type frame according to the present invention is fabricated, a settable angle of each strip 20 can be maintained easily at a predetermined angle and also the fastening angle of each strip 20 can be maintained firmly, thereby improving greatly strength of the assembled frame configuration.

While the invention has been shown and described with reference to exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

**Claims**

**1.** Components for an assembly-type frame, comprising:

a bolt(10) provided with a head portion (11) and a cylindrical body (12) extending downward from the head portion (11) and formed with a plurality screw threads therein;
a nut (30) formed with a plurality of screw threads, corresponding to the plurality of screw threads in the bolt (10); and
at least two strips (20) which are interposed between the head portion (11) of the bolt (10) and the nut (30) and connected to each other when the bolt (10) and the nut (30) are fastened, and provided with a plurality of joint holes (25),
wherein the bolt (10) is provided with a locking pillar portion (15) which is disposed between the head portion (11) and the cylindrical body (12) and a shortest diameter of which is greater than a diameter of the cylindrical body (12) and is shaped as a non-circular form, and wherein the strip (20) formed of a plate member and provided with a plurality of joint holes (25) each of which is shape-engaged with the locking pillar portion (15) of the bolt (10) to restrain a strip rotation around an axis of the bolt (10) when the locking pillar portion (15) is inserted into the joint hole (25), and wherein a formula of $(n-1) \times b < a \leq n \times b$ is satisfied,

wherein n represents the number of the strip (20), b represents a thickness of the strip (20), and a represents a height of the locking pillar portion (15).

2. The components for an assembly type-frame of claim 1, wherein a sectional shape of the locking pillar portion (15) vertical to axial direction of the bolt (10) is a regular polygonal shape.

3. The components for an assembly type-frame of claim 2, wherein a sectional shape of the locking pillar portion (15) vertical to an axial direction of the bolt (10) is a square form and at least one of the joint holes (25) corresponding to the locking pillar portion is a star shape formed in overlapping manner with outer lines made by rotating two square forms at 45°.

4. The components for an assembly-type frame of claim 2, wherein a sectional shape of the locking pillar portion (15) vertical to an axial direction of the bolt (10) is a regular triangle and at least one of the joint holes (25) corresponding to the locking pillar portion is a star shape formed in overlapping manner with outer lines made by rotating two regular triangles at 60°.

[Fig. 1]

[Fig. 2]

[Fig. 3]

[Fig. 4]

[Fig. 5]

25

10

20

[Fig. 6]

11

15

12

a

10

b

20

25

[Fig. 7]

[Fig. 8]